(19) **Europäisches Patentamt**
**European Patent Office**
**Office européen des brevets**

(11) **EP 3 157 088 A1**

(12) **EUROPEAN PATENT APPLICATION**
published in accordance with Art. 153(4) EPC

(43) Date of publication:
**19.04.2017 Bulletin 2017/16**

(21) Application number: **15771497.3**

(22) Date of filing: **11.06.2015**

(51) Int Cl.:
**H01M 10/04** (2006.01)   **H01M 2/26** (2006.01)
**H01M 2/04** (2006.01)   **H01M 2/02** (2006.01)
**H01M 10/0587** (2010.01)

(86) International application number:
**PCT/KR2015/005890**

(87) International publication number:
**WO 2015/190848 (17.12.2015 Gazette 2015/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **13.06.2014   KR 20140071943**
**10.02.2015   KR 20150019894**
**17.02.2015   KR 20150024197**

(71) Applicant: **Orange Power Ltd.**
**Daejeon 305-509 (KR)**

(72) Inventors:
• **HONG, Young Jin**
**Daejeon 305-756 (KR)**
• **LEE, Young Jae**
**Daejeon 305-722 (KR)**
• **LEE, Sung Keun**
**Daejeon 305-739 (KR)**

• **KANG, Soon Sun**
**Seoul 158-776 (KR)**
• **KIM, Kyung Ho**
**Seongnam-si**
**Gyeonggi-do 463-815 (KR)**
• **KIM, Kwon Soo**
**Daejeon 305-751 (KR)**
• **CHO, In Hwan**
**Icheon-si**
**Gyeonggi-do 467-801 (KR)**
• **CHOI, Gyeong Rin**
**Gwangju 502-758 (KR)**
• **PARK, Jae Seok**
**Daejeon 305-509 (KR)**
• **KIM, Byung Ju**
**Daejeon 302-792 (KR)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(54) **ELECTROCHEMICAL DEVICE AND METHOD FOR MANUFACTURING SAME**

(57)   Disclosed are an electrochemical device and a method for manufacturing the same. The electrochemical device includes an electrode assembly that is formed in such a manner that a first electrode, a separator, and a second electrode are wound in the form of a jelly-roll shape, and includes a hollow portion in a center thereof, a first tap plate that is installed on an upper surface of the electrode assembly to be electrically connected to the first electrode, and includes a first through-hole corresponding to the hollow portion in a center thereof, and a second tap plate that is installed on a lower surface of the electrode assembly to be electrically connected to the second electrode, and includes a second through-hole corresponding to the hollow portion in a center thereof.

[Fig. 1]

EP 3 157 088 A1

## Description

[Technical Field]

The present invention relates to an electrochemical device and a method for manufacturing the same, and more particularly, to an electrochemical device having a structure with improved cooling efficiency and assemblability and a method for manufacturing the same.

[Background Art]

In recent years, a secondary battery capable of being charged or discharged has been widely used as an energy source of a wireless mobile device.

In addition, the secondary battery has attracted attention as power sources of an electric vehicle (EV), a hybrid electric vehicle (HEV), a plug-in HEV, and the like which have been proposed as a method for solving air pollution and the like caused by conventional gasoline vehicles, diesel vehicles, etc., which use fossil fuels.

In small-sized mobile devices, one or a couple of battery cells are used per one device, whereas in middle- or large-sized mobile devices such as vehicles, a middle- or large-sized battery module in which a plurality of battery cells are electrically connected is used for the necessity of high-output and large-capacity.

The middle- or large-sized battery module is preferably made with as small size and low weight as possible, and therefore a prismatic battery, a pouch-shaped battery, and the like, which are capable of being charged with a high degree of integration and have a low weight versus the capacity, are mainly used as a battery cell (unit battery) of the middle- or large-sized battery module.

In particular, the pouch-shaped battery that uses an aluminum laminate sheet or the like as an exterior member has recently attracted a lot of attention due to the advantages such as a low weight, low manufacturing costs, the ease of shape deformation, and the like.

Battery cells constituting such a middle- or large-sized battery module may generate a large amount of heat in a charging/discharging process, and therefore, when the heat of the battery module is not effectively removed, thermal heat build-up may occur resulting in promoting the degradation of the battery module, and in some cases, it may result in a fire or explosion. In particular, when the cooling of the battery cell positioned in the middle of a battery cell laminate is not carried out properly, a reduction in the entire life of the battery module is caused.

Thus, a method of forming a refrigerant passage between the battery cells or the battery modules or additionally installing a separate cooling system has been used in order to effectively remove heat, but this structure is required to secure a plurality of refrigerant passages in response to a plurality of battery cells, and thereby has a problem that the overall size of the battery module is increased.

[Disclosure]

[Technical Problem]

The present invention is directed to providing an electrochemical device in which heat is efficiently dissipated to minimize the internal thermal heat build-up, and the assemblability is improved to improve the productivity, and a method for manufacturing the same.

[Technical Solution]

One aspect of the present invention provides an electrochemical device including: an electrode assembly that is formed in such a manner that a first electrode, a separator, and a second electrode are wound in the form of a jelly-roll shape, and includes a hollow portion in a center thereof; a first tap plate that is installed on an upper surface of the electrode assembly to be electrically connected to the first electrode, and includes a first through-hole corresponding to the hollow portion in a center thereof; and a second tap plate that is installed on a lower surface of the electrode assembly to be electrically connected to the second electrode, and includes a second through-hole corresponding to the hollow portion in a center thereof.

Here, a first welding portion to which a first non-coated portion extending from an upper end portion of the first electrode is welded by welding may be formed to protrude from a lower surface of the first tap plate.

Also, a first groove may be formed on an upper surface of the first tap plate, and formed directly above the first welding portion.

Also, the first welding portion and the first groove may be radially formed around the first through-hole.

Also, an inlet for injecting an electrolytic solution may be formed in the first tap plate.

Here, a second welding portion to which a second non-coated portion extending from a lower end portion of the second electrode is welded by welding may be formed to protrude from an upper surface of the second tap plate.

Also, a second groove may be formed on a lower surface of the second tap plate, and formed directly below the second welding portion.

Also, the second welding portion and the second groove may be radially formed around the second through-hole.

Meanwhile, the electrochemical device may further include: an outer case that accommodates the electrode assembly and the first and second tap plates, and in which the shortest distance from a central portion thereof to an outer peripheral surface thereof is L; and an inner case that is inserted into the hollow portion of the electrode assembly, and includes a hole with a radius r in a center thereof. Here, the shortest distance D from an arbitrary point between the inner case and the outer case to the outside in which a refrigerant is circulated may satisfy the following relational expression 1.

[Relational expression 1]

$$D \leq L/2$$

Here, the radius r of the hole may be at least 1 mm or more, and the hole may be in a concentric relationship with a cross-section of the outer case.

Also, the following relational expression 2 may be satisfied between the radius r of the hole and the shortest distance L from the central portion of the outer case to the outer peripheral surface thereof.

[Relational expression 2]

$$r \leq L/2$$

Meanwhile, a first non-coated portion extending from an upper end portion of the first electrode may be welded to a lower surface of the first tap plate while being bent in a direction facing each other, and a second non-coated portion extending from a lower end portion of the second electrode may be electrically connected to an upper surface of the second tap plate while being bent in a direction facing each other.

Here, the first and second non-coated portions positioned close to the outer case may be bent toward the inner case, and the first and second non-coated portions positioned close to the inner case may be bent toward the outer case.

Also, the first and second non-coated portions may be electrically connected to the first and second tap plates, respectively, in a state of being wrinkled.

Also, the following relational expression 3 may be satisfied between cross-sectional areas R of the first and second tap plates and a cross-sectional area r1 of the electrode assembly.

[Relational expression 3]

$$0.2 \leq (R)/(r1) \leq 1.0$$

Also, a distance between the first non-coated portions welded to the first tap plate and a distance between the second non-coated portions welded to the second tap plate may be larger than 0 and less than 0.5 mm.

Another aspect of the present invention provides a method for manufacturing an electrochemical device, including: forming an electrode assembly including a hollow portion formed in a center thereof, by sequentially laminating a first electrode, a separator, and a second electrode in a repetitive manner to obtain a laminate and then winding the obtained laminate; positioning a first tap plate on an upper surface of the electrode assembly so that a first through-hole formed in a center of the first tap plate communicates with the hollow portion of the electrode assembly; welding a first non-coated portion extending from an upper end portion of the first electrode, to a first welding portion protruding from a lower surface of the first tap plate; positioning a second tap plate on a lower surface of the electrode assembly so that a second through-hole formed in a center of the second tap plate communicates with the hollow portion of the electrode assembly; and welding a second non-coated portion extending from a lower end portion of the second electrode, to a second welding portion protruding from an upper surface of the second tap plate.

Here, the welding of the first non-coated portion may include bringing the first non-coated portion extending from an upper end of the first electrode in contact with the first welding portion, and performing welding along a first groove, which is formed on an upper surface of the first tap plate to be positioned directly above the first welding portion, so that the first non-coated portion is melted and welded to the first welding portion.

Also, the welding of the second non-coated portion may include bringing the second non-coated portion extending from a lower end of the second electrode in contact with the second welding portion, and performing welding along a second groove, which is formed on a lower surface of the second tap plate to be positioned directly below the second welding portion, so that the second non-coated portion is melted and welded to the second welding portion.

[Advantageous Effects]

According to the present invention, a hollow portion of an electrode assembly may be exposed to the outside so that a refrigerant is circulated through the hollow portion, thereby rapidly cooling a central portion of an electrochemical device in which high heat is generated.

Also, according to the present invention, a distance from an arbitrary internal point to the outside in which a refrigerant is circulated may be adjusted to be within a predetermined distance, whereby the heat generated from the hollow portion may be more efficiently emitted.

Also, according to the present invention, a contact area between first and second non-coated portions and first and second tap plates may be increased to prevent welding defects, and the first and second non-coated portions may be welded to the first and second tap plates while being wrinkled, thereby improving the electrolyte injection property.

[Description of Drawings]

FIG. 1 is an exploded perspective view showing a structure of an electrochemical device according to a first embodiment of the present invention;

FIGS. 2 and 3 are views showing a structure of an electrode assembly according to an embodiment of the present invention, in more detail;

FIG. 4 is a perspective view showing a first tap plate according to an embodiment of the present invention;

FIG. 5 is a side view showing a first tap plate according to an embodiment of the present invention;

FIG. 6 is a perspective view showing a second tap plate according to an embodiment of the present invention;

FIG. 7 is a side view showing a second tap plate according to an embodiment of the present invention;

FIG. 8 is a perspective view showing the overall structure of an electrochemical device according to a first embodiment of the present invention;

FIG. 9 is a cross-sectional view cut along line A-A' in FIG. 8;

FIG. 10 is a perspective view showing another embodiment of an outer case according to a first embodiment of the present invention;

FIG. 11 is a cross-sectional view cut along line B-B' in FIG. 10;

FIG. 12 is a cross-sectional view showing a structure of an electrochemical device according to a second embodiment of the present invention;

FIG. 13 is an enlarged view of a portion A of FIG. 12;

FIG. 14 is an enlarged view of a portion B of FIG. 12; and

FIG. 15 is a schematic view showing a method for manufacturing an electrochemical device according to a second embodiment of the present invention.

[Modes of the Invention]

Hereinafter, preferred embodiments of the present disclosure will be described in detail with reference to the accompanying drawings. Prior to the description, it should be understood that the same reference numbers will be used throughout the drawings to refer to the same or like parts. Further, detailed description of known arts will be omitted if it is determined that the arts can mislead the embodiments of the invention.

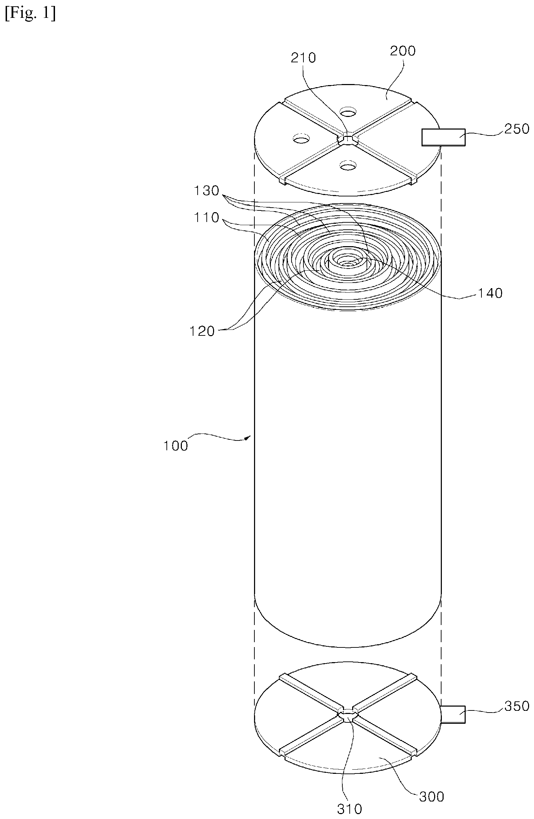

FIG. 1 is an exploded perspective view showing a structure of an electrochemical device according to a first embodiment of the present invention.

As shown in FIG. 1, the electrochemical device according to the first embodiment of the present invention may include an electrode assembly 100, a first tap plate 200, and a second tap plate 300.

The electrode assembly 100 includes a first electrode 110, a second electrode 120, a separator 130 interposed between the first electrode 110 and the second electrode 120 that are wound in the form of a jelly-roll shape, and a hollow portion 140 that is formed in a center thereof.

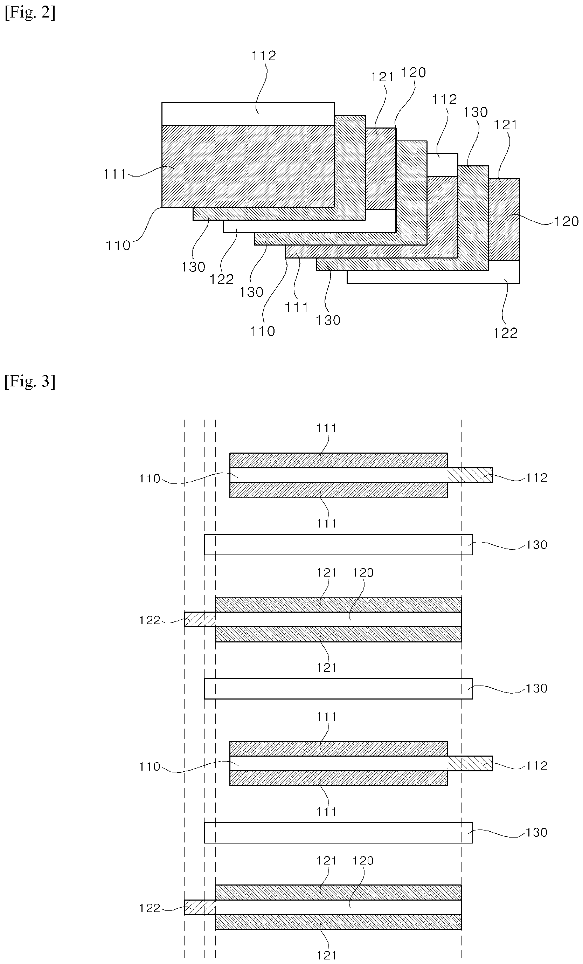

FIGS. 2 and 3 are views showing a structure of an electrode assembly according to an embodiment of the present invention, in more detail.

The first electrode 110 is made of a metal material having excellent electrical conductivity, and a first active material layer 111 of a thin film is formed on one surface or both surfaces of the first electrode 110, as shown in FIGS. 2 and 3.

Here, when it is assumed that the first electrode 110 is a positive electrode, the first electrode 110 may be made of an aluminum material, and the first active material layer 111 may include a lithium (Li) compound containing one or more nonmetallic elements selected from the group consisting of one or more metals of nickel (Ni), cobalt (Co), manganese (Mn), aluminum (Al), chromium (Cr), iron (Fe), magnesium (Mg), strontium (Sr), vanadium (V), lanthanum (La), and cerium (Ce), and oxygen (O), fluorine (F), sulfur (S), and phosphorus (P), and a combination thereof.

A first non-coated portion 112 that is a region in which the first active material layer 111 is absent is formed to extend from an upper end portion of such a first electrode 110. A partial region of the first non-coated portion 112 is formed to be positioned above the separator 130, and is electrically connected to the first tap plate 200, which will be described in more detail below, by welding or the like.

The second electrode 120 is made of a conductive metal material having a different polarity from that of the first electrode 110, and a second active material layer 121 of a thin film is formed on one surface or both surfaces of the second electrode 120 as shown in FIGS. 2 and 3. The second active material layer 121 is formed to be larger than the first active material layer 111.

Here, when it is assumed that the second electrode 120 is a negative electrode, the second electrode 120 may be made of a copper or nickel material, and the second active material layer 121 may include a carbon-based material such as low crystalline carbon or high crystalline carbon capable of inserting or desorbing lithium ions.

A second non-coated portion 122 that is a region in which the second active material layer 121 is absent is formed to extend from a lower end portion of such a second electrode 120. A partial region of the second non-coated portion 122 is formed to be positioned below the separator 130, and is electrically connected to the second tap plate 300, which will be described in more detail below, by welding or the like.

The separator 130 is interposed between the first and second electrodes 110 and 120 and physically separates the contact of the positive electrode and the negative electrode. Specifically, the separator 130 is formed to be larger than the first and second active material layers 111 and 121, so that the first and second active material layers 111 and 121 formed in the first and second electrodes 110 and 120 are prevented from being directly brought into contact with each other.

Such a separator 130 may be produced as a microporous membrane, a woven fabric, a nonwoven fabric, an intrinsic solid polymer electrolyte membrane, a gel solid polymer electrolyte membrane, a microporous membrane coated with inorganic ceramic powder, or the like, and serve as a battery by allowing ions to pass through the separator 130 through the pores of several tens of nanometers.

The first tap plate 200 is installed on an upper surface of the electrode assembly 100, and includes a first through-hole 210 that is formed in a center thereof and communicates with the hollow portion 140 of the electrode assembly 100. Thus, even after the first tap plate 200 is installed, the hollow portion 140 is exposed to the outside through the first through-hole 210.

In addition, the first electrode 110 of the electrode assembly 100 is electrically connected to a lower surface of the first tap plate 200. Specifically, the first non-coated portion 112 extending from the upper end portion of the first electrode 110 is welded to the lower surface of the first tap plate 200 by laser welding, spot welding, ultrasonic welding, or the like.

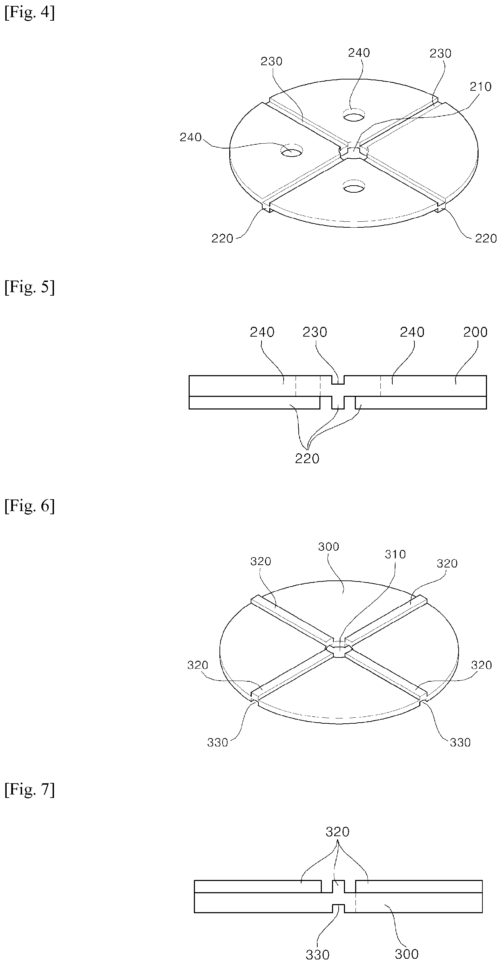

FIG. 4 is a perspective view showing a first tap plate according to an embodiment of the present invention, and FIG. 5 is a side view showing a first tap plate according to an embodiment of the present invention.

For this, as shown in FIGS. 4 and 5, a first welding portion 220 to which the first non-coated portion 112 is welded is formed to protrude from the lower surface of the first tap plate 200, and a first groove 230 is formed on an upper surface of the first tap plate 200.

Here, it is preferable that the first groove 230 be formed directly above the first welding portion 220. In this case, when welding is performed along the first groove 230 in a state in which the first tap plate 200 is positioned on the upper surface of the electrode assembly 100, the first non-coated portion 112 having been brought into contact with the first welding portion 220 is naturally melted by heat and welded to the first welding portion 220, and therefore it is unnecessary to separately determine the position of the first welding portion 220 at the time of welding operation, whereby it is possible to more rapidly proceed the welding operation.

The shape of such a first groove 230 may be modified depending on the shape of the first welding portion 220. For example, when the first welding portion 220 is radially formed around the first through-hole 210 as shown in the drawing, the first groove 230 is also radially formed around the first through-hole 210.

In addition, an inlet 240 for injecting an electrolytic solution into the electrochemical device may be formed in the first tap plate 200. A plurality of inlets 240 may be provided, as necessary.

The second tap plate 300 may be installed on the lower surface of the electrode assembly 100, and includes a second through-hole 310 that is formed in a center of the second tap plate 300 and communicates with the hollow portion 140 of the electrode assembly 100. Thus, when the second tap plate 300 is installed, the hollow portion 140 is exposed to the outside through the first and second through-holes 210 and 310.

In addition, the second electrode 120 of the electrode assembly 100 is electrically connected to an upper surface of the second tap plate 300. Specifically, the second non-coated portion 122 extending from the lower end portion of the second electrode 120 is welded to the upper surface of the second tap plate 300 by laser welding, spot welding, ultrasonic welding, or the like.

FIG. 6 is a perspective view showing a second tap plate according to an embodiment of the present invention, and FIG. 7 is a side view showing a second tap plate according to an embodiment of the present invention.

For this, as shown in FIGS. 6 and 7, a second welding portion 320 to which the second non-coated portion 122 is welded is formed to protrude from the upper surface of the second tap plate 300, and a second groove 330 is formed on a lower surface of the second tap plate 300.

Here, it is preferable that the second groove 330 be formed directly below the second welding portion 320. In this case, when welding is performed along the second groove 330 in a state in which the second tap plate 300 is positioned on the lower surface of the electrode assembly 100, the second non-coated portion 122 having been brought into contact with the second welding portion 320 is naturally melted by heat and welded to the second welding portion 320, and therefore it is unnecessary to separately determine the position of the second welding portion 320 at the time of welding operation, whereby it is possible to more rapidly proceed the welding operation.

The shape of such a second groove 330 may be also modified depending on the shape of the second welding portion 320. For example, when the second welding portion 320 is radially formed around the second through-hole 310, the second groove 330 is also radially formed around the second through-hole 310.

Reference numerals 250 and 350 which are not described are first and second electrode taps which are electrically connected to one side of the first and second tap plates 200 and 300, respectively. The first and second electrode taps 250 and 350 may be installed for electrical connection with the outside.

A method for manufacturing the electrochemical device according to the first embodiment of the present invention which is configured in this manner will be briefly described as below.

First, the electrode assembly 100 is formed in such a manner that the first electrode 110, the separator 130, and the second electrode 120 are sequentially laminated in a repetitive manner, and then the obtained laminate is wound in the form of a jelly-roll shape, and thereby the hollow portion 140 is provided in the center of the electrode assembly 100.

Next, the first tap plate 200 may be positioned on the upper surface of the electrode assembly 100, so that the first through-hole 210 formed in the center of the first tap plate 200 communicates with the hollow portion 140 of the electrode assembly 100.

In this instance, the first non-coated portion 112 extending from the upper end portion of the first electrode 110 is made to be brought into contact with the first welding portion 220 formed on the lower surface of the first tap plate 200.

Next, by performing welding along the first groove 230 formed on the upper surface of the first tap plate 200, the first non-coated portion 112 is melted and welded to the first welding portion 220.

Next, the second tap plate 300 may be positioned on the lower surface of the electrode assembly 100, so that the second through-hole 310 formed in the center of the second tap plate 300 communicates with the hollow portion 140 of the electrode assembly 100.

In this instance, the second non-coated portion 122 extending from the lower end portion of the second electrode 120 is made to be brought into contact with the second welding portion 320 formed on the upper surface of the second tap plate 300.

Next, by performing welding along the second groove 330 formed on the lower surface of the second tap plate 300, the second non-coated portion 122 is melted and welded to the second welding portion 320.

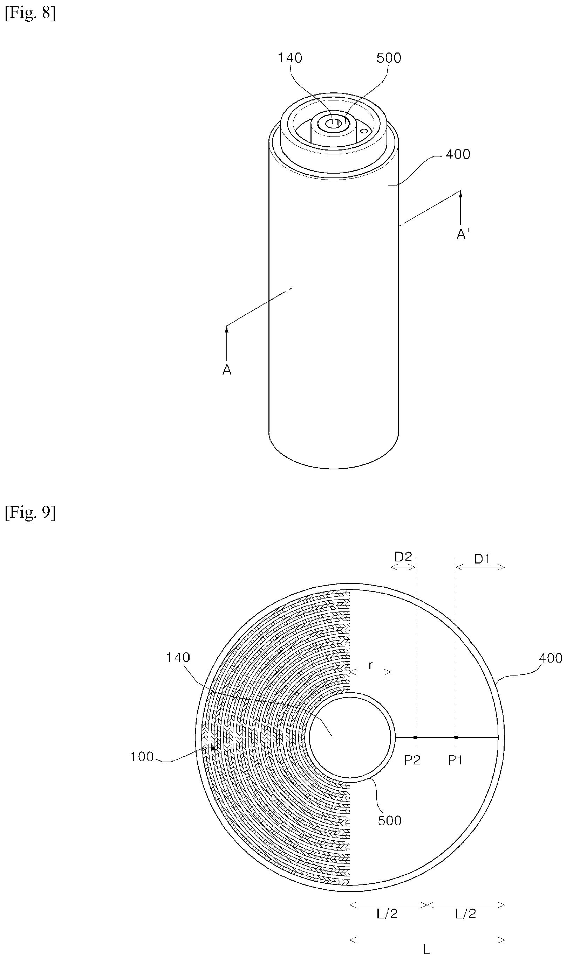

FIG. 8 is a perspective view showing the overall structure of an electrochemical device according to a first embodiment of the present invention, and FIG. 9 is a cross-sectional view cut along line A-A' in FIG. 8.

Meanwhile, the electrode assembly 100 manufactured as described above and an assembly of the first and second tap plates 200 and 300 are accommodated in an outer case 400 as shown in FIGS. 8 and 9, and in this instance, an inner case 500 is inserted into the hollow portion 140 of the electrode assembly 100.

A hole with a radius r is formed in the center of the inner case 500, and thereby the hollow portion 140 maintains a state of being exposed to the outside even when the inner case 500 is inserted into the hollow portion 140. Thus, by circulating a refrigerant to the hole of the inner case 500 as well as the outer peripheral surface of the outer case 400, it is possible to rapidly cool the central portion of the electrochemical device in which high heat is generated as well as the outer surface of the electrochemical device.

Meanwhile, when the shortest distance from the central portion of the outer case 400 to the outer peripheral surface thereof is L, a radius of the hole formed in the center of the inner case 500 is r, and the shortest distance from an arbitrary point P between the inner case 500 and the outer case 400 to the outside in which the refrigerant is circulated is D, D satisfies the following relational expression 1.

[Relational expression 1]

$$D \leq L/2$$

Here, since D is the shortest distance from the arbitrary point P to the outside, the shortest distance D indicates a distance from the position of the arbitrary point P to the outer peripheral surface of the outer case 400 or a distance from the position of the arbitrary point P to an inner peripheral surface of the inner case 500 depending on the position of the arbitrary point P distant from the central portion.

That is, when an arbitrary point P1 is positioned away from the central portion by L/2 or more as shown in FIG. 9, the shortest distance D from the arbitrary point P1 to the outside may be naturally a distance D1 to the outer peripheral surface of the outer case 400, and when an arbitrary point P2 is positioned away from the central portion by less than L/2, the shortest distance D from the arbitrary point P2 to the outside may be naturally a distance D2 to the inner peripheral surface of the inner case 500.

Meanwhile, it is preferable that the cross-section of the inner case 500 be in a concentric relationship with the cross-section of the outer case 400. When the cross-section of the inner case 500 is not in the concentric relationship with the cross-section of the outer case 400, the cross-sectional shape of the electrochemical device is asymmetric as a whole, and therefore heat accumulated in a charging/discharging process may not be dissipated.

In addition, it is preferable that the following relational expression 2 be satisfied between the radius r of the hole and the shortest distance L from the central portion to the outer peripheral surface of the outer case 400, and the radius r of the hole be 1 mm or more.

[Relational expression 2]

$$r \leq L/2$$

When the radius r of the hole is less than 1 mm, internal heat generation effect and passage formation effect by means of the hole become insufficient, and when the radius r of the hole is larger than L/2, a space in which the electrode assembly 100 is accommodated is reduced along with an increase in an area ratio of the hole, and thereby it is not able to increase the battery capacity.

Meanwhile, the cross-sectional shape of the outer case 400 may be freely selected from the group consisting of a circle, a rectangle, a triangle, and a polygon.

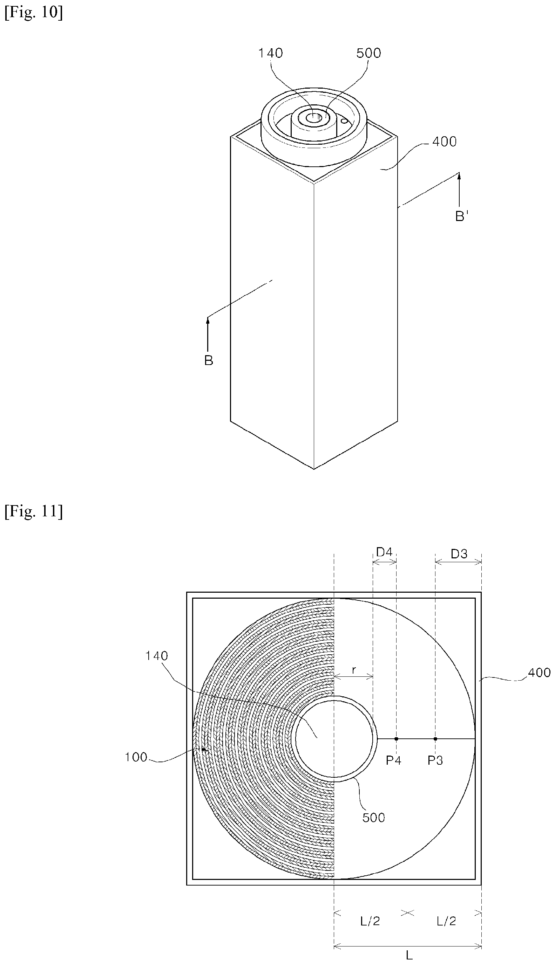

FIG. 10 is a perspective view showing another embodiment of an outer case according to a first embodiment of the present invention, and FIG. 11 is a cross-sectional view cut along line B-B' in FIG. 10.

For example, as shown in FIGS. 10 and 11, the outer case 400 may be formed to have a rectangular cross-section. Even in this case, when the shortest distance from the central portion of the outer case 400 to the outer peripheral surface thereof is L, the radius of the hollow portion formed in the center of the inner case 500 is r, and the shortest distance from the arbitrary point P between the inner case 500 and the outer case 400 to the outside in which a refrigerant is circulated is D, the shortest distance D satisfies the following relational expression 1 in the same manner.

[Relational expression 1]

$$D \leq L/2$$

Here, since D is the shortest distance from the arbitrary point P to the outside, the shortest distance D indicates a distance from the position of the arbitrary point P to the outer peripheral surface of the outer case 400 or a distance from the position of the arbitrary point P to the inner peripheral surface of the inner case 500 depending on the position of the arbitrary point P distant from the central portion.

That is, when an arbitrary point P3 is positioned away from the central portion by L/2 or more, the shortest distance D from the arbitrary point P3 to the outside may be a distance D3 to the outer peripheral surface of the outer case 400, and when an arbitrary point P4 is positioned away from the central portion by less than L/2, the shortest distance D from the arbitrary point P2 to the outside may be a distance D4 to the inner peripheral surface of the inner case 500.

In addition, even when the outer case 400 has a rectangular cross-section, the radius r of the hole and the shortest distance L from the central portion to the outer peripheral surface of the outer case 400 may satisfy the above-described relational expression 2, and the radius r of the hole may be formed to be 1 mm or more.

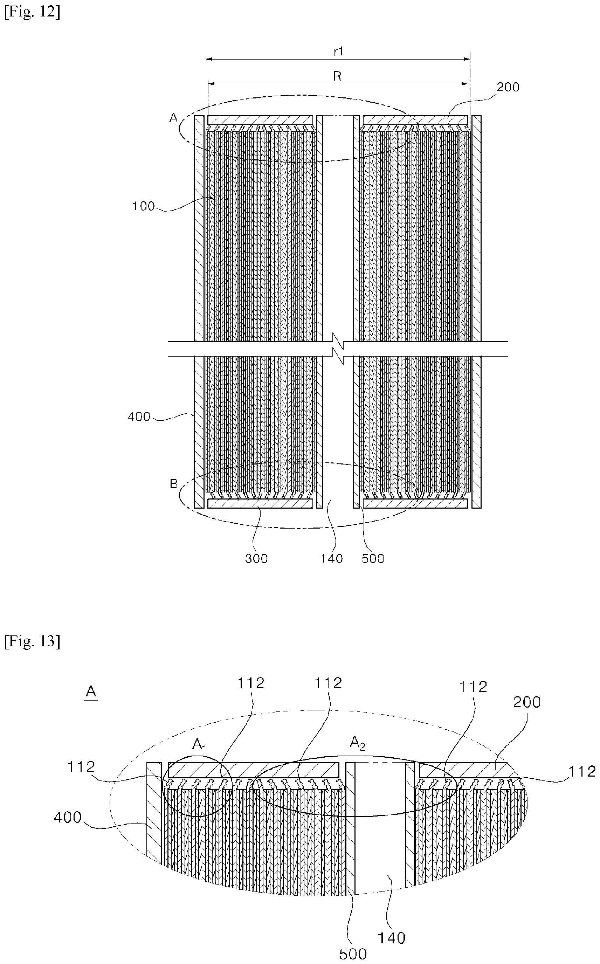

FIG. 12 is a cross-sectional view showing a structure of an electrochemical device according to a second embodiment of the present invention.

The electrochemical device according to the second embodiment of the present invention may include the electrode assembly 100, the first and second tap plates 200 and 300, the outer case 400, and the inner case 500 as shown in FIG. 12.

The electrode assembly 100 is formed in such a manner that the first and second electrodes 110 and 120 and the separator 130 are wound in the form of a jelly-roll shape, and the first and second tap plates 200 and 300 are installed on upper and lower surfaces of the electrode assembly 100 and electrically connected to the first and second non-coated portions 112 and 122, respectively.

The outer case 400 allows the electrode assembly 100 and the first and second tap plates 200 and 300 to be accommodated therein, and the inner case 500 is inserted into the hollow portion 140 of the electrode assembly 100.

The structures of the electrode assembly 100, the first and second tap plates 200 and 300, the outer case 400, and the inner case 500 are the same as those in the first embodiment of the present invention, and thus detailed description thereof will be omitted herein.

However, the electrochemical device according to the second embodiment of the present invention is characterized in that the first non-coated portion 112 of the first electrode 110 is connected to the lower surface of the first tap plate 200 while being bent in a direction facing each other, and the second non-coated portion 122 of the second electrode 120 is connected to the upper surface of the second tap plate 300 while being bent in a direction facing each other.

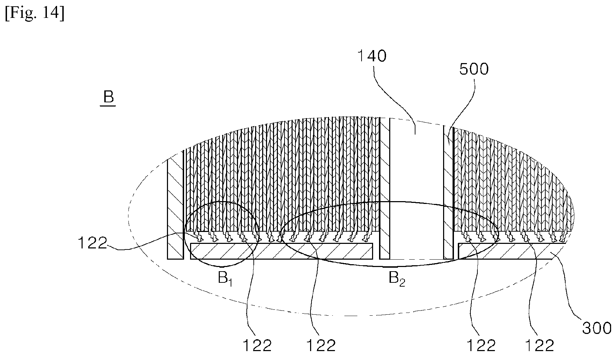

FIG. 13 is an enlarged view of a portion A of FIG. 12, and FIG. 14 is an enlarged view of a portion B of FIG. 12.

Specifically, as shown in FIGS. 13 and 14, the first and second non-coated portions 112 and 122 positioned close to the outer case 400 are bent at a predetermined angle toward the inner case 500, and connected to the lower surfaces of the first and second tap plates 200 and 300 (see, A1 of FIG. 13 and B1 of FIG. 14). In addition, the first and second non-coated portions 112 and 122 positioned close to the inner case 500 are bent at a predetermined angle toward the outer case 400, and connected to the lower surfaces of the first and second tap plates 200 and 300 (see, A2 of FIG. 13 and B2 of FIG. 14).

In this manner, when the first and second non-coated portions 112 and 122 are bent at a predetermined angle in a direction facing each other, and connected to the lower surfaces of the first and second tap plates 200 and 300, an area in which the first and second non-coated portions 112 and 122 are brought into contact with the first and second tap plates 200 and 300 is increased, and therefore the first and second non-coated portions 112 and 122 may be effectively welded to the first and second tap plates 200 and 300 at the time of welding.

In addition, in a case in which the first and second non-coated portions 112 and 122 positioned close to the inner case 500 are bent toward the outer case 400, and the first and second non-coated portions 112 and 122 positioned close to the outer case 400 are bent toward the inner case 500, it is possible to prevent the first and second non-coated portions 112 and 122 from being brought into contact with the outer case 400 and the inner case 500, when the electrode assembly 100 is accommodated in the outer case 400 and the inner case 500 is inserted into the hollow portion 140 of the electrode assembly 100.

However, when a bent angle of the first and second non-coated portions 112 and 122 is increased by a predetermined value or more, the contact area between the first and second non-coated portions 112 and 122 and the first and second tap plates 200 and 300 is increased and thereby the ease of the welding and accommodating operations may be increased as described above, but interference between the electrolytic solution injected into the inlet 240 of the first tap plate 200 and the first and second non-coated portions 112 and 122 may occur to cause a degradation of the injection property of the electrolytic solution.

The bent angle of the first and second non-coated portions 112 and 122 may be increased as the cross-sectional area (R) of the first and second tap plates 200 and 300 becomes smaller than the cross-sectional area (r1) of the electrode assembly 100. It can be seen from the experiment that, when a ratio of the cross-sectional area (R) of the first and second tap plates and the cross-sectional area (r1) of the electrode assembly 100 is smaller than 0.2, the bent angle of the first and second non-coated portions 112 and 122 is increased beyond its necessity and thereby the injection property of the electrolytic solution is degraded.

Thus, it is preferable that the ratio of the cross-sectional area (R) of the first and second tap plates and the cross-sectional area (r1) of the electrode assembly 100 satisfy the following relational expression 3, so that the bent angle of the first and second non-coated portions 112 and 122 can be maintained to be a predetermined value or less.

[Relational expression 3]

$$0.2 \leq (R)/(r1) \leq 1.0$$

In addition, it is preferable that a distance between the first non-coated portions 112 of the first electrode 110 and a distance between the second non-coated portions 122 of the second electrode 120 be adjusted to be a predetermined value or less.

Assuming that the electrode assembly 100 having the same thickness is formed, when the distance between the first non-coated portions 112 and the distance between the second non-coated portions 122 are increased, that is, when the thickness of the first and second electrodes 110 and 120 or the separator 130 is increased, the electrode assembly 100 may be formed by laminating the smaller number of the first and second electrodes 110 and 120. In this case, the number of the first and second non-coated portions 112 and 122 being brought into contact with the first and second tap plates 200 and 300 is reduced and thereby the injection property of the electrolytic solution is improved, but the number of times of winding of the first and second electrodes 110 and 120 constituting the electrode assembly 100 is also reduced resulting in a reduction in the battery capacity.

Thus, it is preferable that the distance between the first non-coated portions 112 of the first electrode 110 and the distance between the second non-coated portions 122 of the second electrode 120 be adjusted to be larger than 0 and less than 0.5 mm.

Meanwhile, it is preferable that the first and second non-coated portions 112 and 122 be welded to the first and second tap plates 200 and 300 while being wrinkled. When the first and second non-coated portions 112 and 122 are welded in a state of being wrinkled, the contact area between the first and second non-coated portions 112 and 122 and the first and second tap plates 200 and 300 may be naturally increased and the injection property of the electrolytic solution may be also improved.

A method for manufacturing the electrochemical device according to the second embodiment of the present invention will be briefly described as below.

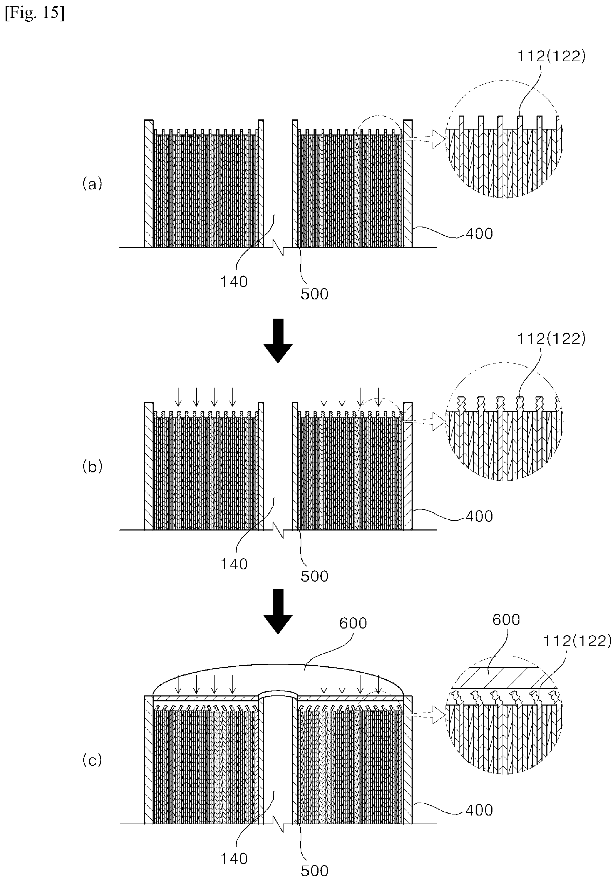

FIG. 15 is a schematic view showing a method for manufacturing an electrochemical device according to a second embodiment of the present invention.

First, as shown in FIG. 15(a), the electrode assembly 100 that is wound in the form of a jelly-roll shape and includes the hollow portion 140 in the center thereof is accommodated in the outer case 400, and at the same time, the inner case 500 is inserted into the hollow portion 140 of the electrode assembly 100.

Next, as shown in FIG. 15(b), wrinkles are formed in the first and second non-coated portions 112 and 122 by applying a tapping pressure to the upper and lower surfaces of the electrode assembly 100. Here, a method for forming the wrinkles in the first and second non-coated portions 112 and 122 may be variously provided, and may be applied freely by those skilled in the art.

Next, as shown in FIG. 15(c), the first and second non-coated portions 112 and 122 in which the wrinkles are formed are pressed downward using a jig 600, and are bent to be inclined.

In this instance, by appropriately adjusting the pressure applied to the jig 600, the first and second non-coated portions 112 and 122 positioned close to the hollow portion 140 are made bent toward the outer case 400, and the first and second non-coated portions 112 and 122 positioned close to the outer case 400 are made bent toward the hollow portion 140, as described above.

Next, the jig 600 is removed, and then the first and second tap plates 200 and 300 are positioned on the upper and lower surfaces of the electrode assembly 100, respectively. Next, a welding operation is performed so that the first and second non-coated portions 112 and 122 are welded to the first and second tap plates 200 and 300.

Obviously, when the above-described first and second welding portions 220 and 320 and first and second grooves 230 and 330 are formed in the first and second tap plates 200 and 300, welding is performed along the first and second grooves 230 and 330 so that the first and second non-coated portions 112 and 122 may be melted and welded to the first and second welding portions 220 and 320.

While the invention has been shown and described with reference to certain exemplary embodiments thereof, it will be understood by those skilled in the art that various changes in form and details may be made therein without departing from the spirit and scope of the invention as defined by the appended claims.

**Claims**

1. An electrochemical device comprising:

   an electrode assembly that is formed in such a manner that a first electrode, a separator, and a second electrode are wound in the form of a jelly-roll shape, and includes a hollow portion in a center thereof;
   a first tap plate that is installed on an upper surface of the electrode assembly to be electrically connected to the first electrode, and includes a first through-hole corresponding to the hollow portion in a center thereof; and
   a second tap plate that is installed on a lower surface of the electrode assembly to be electrically connected to the second electrode, and includes a second through-hole corresponding to the hollow portion in a center thereof.

2. The electrochemical device of claim 1, wherein a first welding portion to which a first non-coated portion extending from an upper end portion of the first electrode is welded by welding is formed to protrude from a lower surface of the first tap plate.

3. The electrochemical device of claim 2, wherein a first groove is formed on an upper surface of the first tap plate, and formed directly above the first welding portion.

4. The electrochemical device of claim 3, wherein the first welding portion and the first groove are radially formed around the first through-hole.

5. The electrochemical device of claim 1, wherein an inlet for injecting an electrolytic solution is formed in the first tap plate.

6. The electrochemical device of claim 1, wherein a second welding portion to which a second non-coated portion extending from a lower end portion of the second electrode is welded by welding is formed to protrude from an upper surface of the second tap plate.

7. The electrochemical device of claim 5, wherein a second groove is formed on a lower surface of the second tap plate, and formed directly below the second welding portion.

8. The electrochemical device of claim 7, wherein the second welding portion and the second groove are radially formed around the second through-hole.

9. The electrochemical device of claim 1, further comprising:

   an outer case that accommodates the electrode assembly and the first and second tap plates, and in which the shortest distance from a central portion thereof to an outer peripheral surface thereof is L; and
   an inner case that is inserted into the hollow portion of the electrode assembly, and includes a hole with a radius r in a center thereof,
   wherein the shortest distance D from an arbitrary point between the inner case and the outer case to the outside in which a refrigerant is circulated satisfies the following relational expression 1.

   [Relational expression 1]

   $$D \leq L/2$$

10. The electrochemical device of claim 9, wherein the radius r of the hole is at least 1 mm or more.

11. The electrochemical device of claim 9, wherein the hole is in a concentric relationship with a cross-section of the outer case.

12. The electrochemical device of claim 9, wherein the following relational expression 2 is satisfied between the radius r of the hole and the shortest distance L from the central portion of the outer case to the outer peripheral surface thereof.

   [Relational expression 2]

   $$r \leq L/2$$

13. The electrochemical device of claim 1, wherein a first non-coated portion extending from an upper end portion of the first electrode is welded to a lower surface of the first tap plate while being bent in a direction facing each other, and
   a second non-coated portion extending from a lower end portion of the second electrode is electrically connected to an upper surface of the second tap plate while being bent in a direction facing each other.

14. The electrochemical device of claim 13, further comprising:

   an outer case that accommodates the electrode assembly and the first and second tap plates; and
   an inner case that is inserted into the hollow portion of the electrode assembly,
   wherein the first and second non-coated portions positioned close to the outer case are bent toward the inner case, and the first and second non-coated portions positioned close to the inner case are bent toward the outer case.

15. The electrochemical device of claim 13, wherein the first and second non-coated portions are electrically connected to the first and second tap plates, respectively, in a state of being wrinkled.

16. The electrochemical device of claim 1, wherein the following relational expression 3 is satisfied between cross-sectional areas R of the first and second tap plates and a cross-sectional area r1 of the electrode assembly.

[Relational expression 3]

$$0.2 \leq (R)/(r1) \leq 1.0$$

17. The electrochemical device of claim 13, wherein a distance between the first non-coated portions welded to the first tap plate and a distance between the second non-coated portions welded to the second tap plate are larger than 0 and less than 0.5 mm.

18. A method for manufacturing an electrochemical device, comprising:

forming an electrode assembly including a hollow portion formed in a center thereof, by sequentially laminating a first electrode, a separator, and a second electrode in a repetitive manner to obtain a laminate and then winding the obtained laminate;
positioning a first tap plate on an upper surface of the electrode assembly so that a first through-hole formed in a center of the first tap plate communicates with the hollow portion of the electrode assembly;
welding a first non-coated portion extending from an upper end portion of the first electrode, to a first welding portion protruding from a lower surface of the first tap plate;
positioning a second tap plate on a lower surface of the electrode assembly so that a second through-hole formed in a center of the second tap plate communicates with the hollow portion of the electrode assembly; and
welding a second non-coated portion extending from a lower end portion of the second electrode, to a second welding portion protruding from an upper surface of the second tap plate.

19. The method for manufacturing the electrochemical device of claim 18, wherein the welding of the first non-coated portion includes
bringing the first non-coated portion extending from an upper end of the first electrode in contact with the first welding portion, and
performing welding along a first groove, which is formed on an upper surface of the first tap plate to be positioned directly above the first welding portion, so that the first non-coated portion is melted and welded to the first welding portion.

20. The method for manufacturing the electrochemical device of claim 18, wherein the welding of the second non-coated portion includes
bringing the second non-coated portion extending from a lower end of the second electrode in contact with the second welding portion, and
performing welding along a second groove, which is formed on a lower surface of the second tap plate to be positioned directly below the second welding portion, so that the second non-coated portion is melted and welded to the second welding portion.

[Fig. 1]

[Fig. 2]

[Fig. 3]

[Fig. 4]

230     240     230     210

240

220     220

[Fig. 5]

240     230     240     200

220

[Fig. 6]

320     300     310     320

320     320

330     330

[Fig. 7]

320

330     300

[Fig. 8]

[Fig. 9]

[Fig. 10]

[Fig. 11]

[Fig. 12]

[Fig. 13]

[Fig. 14]

[Fig. 15]

## INTERNATIONAL SEARCH REPORT

International application No.

**PCT/KR2015/005890**

| A. CLASSIFICATION OF SUBJECT MATTER |
|---|
| *H01M 10/04(2006.01)i, H01M 2/26(2006.01)i, H01M 2/04(2006.01)i, H01M 2/02(2006.01)i, H01M 10/0587(2010.01)i* |
| According to International Patent Classification (IPC) or to both national classification and IPC |

| B. FIELDS SEARCHED |
|---|
| Minimum documentation searched (classification system followed by classification symbols) |
| H01M 10/04; H01M 2/30; H01M 2/10; H01M 2/22; H01M 10/02; H01M 2/02; H01M 2/26; H01M 2/04; H01M 10/0587 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: winding, cylinder, jelly roll, collector plate, electrode, assembly |

| C. DOCUMENTS CONSIDERED TO BE RELEVANT | | |
|---|---|---|
| Category* | Citation of document, with indication, where appropriate, of the relevant passages | Relevant to claim No. |
| X<br><br>Y | JP 10-112330 A (NISSAN MOTOR CO., LTD.) 28 April 1998<br>See claims 1-4, paragraphs [0010]-[0016], [0026], figures 3-4. | 1,9-17<br><br>2-8,18-20 |
| Y | KR 10-2006-0130529 A (SAMSUNG SDI CO., LTD.) 19 December 2006<br>See page 4, figures 2-5 | 2-8,18-20 |
| A | KR 10-0786871 B1 (SAMSUNG SDI CO., LTD.) 20 December 2007<br>See the entire document. | 1-20 |
| A | KR 10-2007-0108752 A (SAMSUNG SDI CO., LTD.) 13 November 2007<br>See the entire document. | 1-20 |
| A | KR 10-2005-0103645 A (SAMSUNG SDI CO., LTD.) 01 November 2005<br>See the entire document. | 1-20 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 AUGUST 2015 (20.08.2015) | **21 AUGUST 2015 (21.08.2015)** |

| Name and mailing address of the ISA/**KR** | Authorized officer |
|---|---|
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2015/005890**

| Patent document cited in search report | Publication date | Patent family member | Publication date |
|---|---|---|---|
| JP 10-112330 A | 28/04/1998 | NONE | |
| KR 10-2006-0130529 A | 19/12/2006 | NONE | |
| KR 10-0786871 B1 | 20/12/2007 | US 2008-0026291 A1 | 31/01/2008 |
| KR 10-2007-0108752 A | 13/11/2007 | NONE | |
| KR 10-2005-0103645 A | 01/11/2005 | CN 1694281 A<br>JP 04359260 B2<br>JP 2005-317545 A<br>US 2005-0238951 A1 | 09/11/2005<br>04/11/2009<br>10/11/2005<br>27/10/2005 |